# FASCICULE DE BREVET EUROPEEN

(11) **EP 1 516 343 B1**
(45) Date de publication et mention de la délivrance du brevet: **16.10.2013**
(21) Numéro de dépôt: 03760719.9
(22) Date de dépôt: 06.06.2003
(51) Int. Cl.: G21C 7/117, G21C 21/18, G21C 7/24

(54) **GRAPPE DE REGLAGE DE LA REACTIVITE DU COEUR D'UN REACTEUR NUCLEAIRE, CRAYON ABSORBANT DE LA GRAPPE ET PROCEDE DE PROTECTION CONTRE L'USURE DU CRAYON ABSORBANT**
STEUERSTABEINHEIT ZUR STEUERUNG DER REAKTIVITÄT DES KERNS EINES KERNREAKTORS, ENTSPRECHENDER STEUERSTAB UND VERFAHREN ZUR ERHÖHUNG DER VERSCHLEISSFESTIGKEIT DES STEUERSTABS
CLUSTER FOR ADJUSTING A NUCLEAR REACTOR CORE REACTIVITY, ABSORBER ROD OF THE CLUSTER AND METHOD FOR PROTECTING THE ABSORBER ROD AGAINST WEAR

(30) Priorité: 25.06.2002 FR 0207884
(43) Date de publication de la demande: 23.03.2005
(60) Demande divisionnaire: 09153138.4
(73) Titulaire: Areva NP, 92400 Courbevoie (FR)
(72) Inventeur: HERTZ, Dominique, F-69110 SAINTE FOY LES LYON (FR); DESPREZ, Yves, F-LYON 69007 (FR)
(74) Mandataire: Cornet, Nicolas Yves Pascal
(86) Numéro de dépôt international: PCT/FR2003/001710
(87) Numéro de publication internationale: WO 2004/001765

(56) Documents cités:
- EP-A- 0 353 170
- EP-A- 0 421 868
- WO-A-97/48104
- FR-A- 2 728 097
- PATENT ABSTRACTS OF JAPAN vol. 014, no. 098 (P-1011), 22 février 1990 (1990-02-22) & JP 01 304392 A (TOSHIBA CORP), 7 décembre 1989 (1989-12-07)
- DATABASE WPI Section Ch, Week 198746 Derwent Publications Ltd., London, GB; Class K06, AN 1987-325716 XP002228833 & JP 62 049950 B (NIPPON GENSHIRYOKU JIGYO KK), 22 octobre 1987 (1987-10-22)

## Description

L'invention concerne une grappe de réglage de la réactivité du coeur d'un réacteur nucléaire refroidi par de l'eau légère sous pression et un crayon absorbant d'une telle grappe de réglage.

FR-2 728 097 décrit un crayon pour grappe de réglage.

WO-97/48 104 décrit un crayon pour grappe de réglage dans lequel le tube de gainage est en alliage, Hf-Zr ou Ti-Zr, le bouchon supérieur en alliage Zy-4 ou dans le même alliage que le tube de gainage Hf-Zr ou Ti-Zr, et le bouchon inférieur est en alliage Hf-Zr.

Les réacteurs nucléaires tels que les réacteurs nucléaires à eau sous pression comportent un coeur constitué par des assemblages de combustible juxtaposés dans la cuve du réacteur. Un assemblage de combustible est constitué d'un faisceau de crayons de combustible maintenus dans une structure porteuse, appelée squelette, constituant l'ossature de l'assemblage. Ce squelette comporte en particulier des tubes-guides disposés suivant la direction axiale de l'assemblage de combustible, reliant les embouts supérieur et inférieur et supportant les grilles de maintien des crayons de combustible. Ces tubes-guides ont pour fonction de garantir une bonne rigidité de l'ossature et de permettre l'insertion dans l'assemblage des crayons absorbant les neutrons utilisés pour le réglage de la réactivité du coeur du réacteur nucléaire.

Les crayons absorbants sont reliés entre eux, à leur extrémité supérieure par l'intermédiaire d'un support généralement désigné par le terme "araignée", pour constituer un faisceau appelé grappe de réglage. L'ensemble des crayons absorbants est mobile à l'intérieur des tubes-guides d'assemblage de combustible.

Pour régler la réactivité du coeur du réacteur nucléaire pendant le fonctionnement du réacteur, on déplace les grappes de réglage à l'intérieur de certains assemblages du coeur en position verticale, soit dans le sens de l'insertion, la grappe de réglage étant alors déplacée vers le bas, soit dans le sens de l'extraction, la grappe de réglage étant alors déplacée vers le haut, de manière à introduire une longueur plus ou moins importante des crayons absorbants dans les assemblages du coeur. De manière à régler la réactivité du coeur pendant le fonctionnement du réacteur nucléaire et la répartition de puissance dans le coeur du réacteur, on utilise généralement des grappes de réglage de divers types dans différentes zones du coeur du réacteur nucléaire. On utilise en particulier des grappes très absorbantes ou grappes noires et des grappes moins absorbantes ou grappes grises.

De manière générale, les crayons absorbants sont constitués par un tube qui est fermé à son extrémité supérieure par un premier bouchon appelé bouchon supérieur, et à son extrémité inférieure par un second bouchon appelé bouchon inférieur du crayon. Les crayons absorbants sont fixés à l'araignée de maintien par l'intermédiaire de leurs bouchons supérieurs.

Généralement, pour les grappes noires, l'ensemble des crayons sont des crayons à forte capacité d'absorption des neutrons. Ces crayons absorbants peuvent être constitués par un tube de gainage renfermant des pastilles d'un matériau absorbant tel que le carbure de bore B₄C, par des tubes en un matériau absorbant les neutrons ne renfermant pas de pastilles absorbantes ou encore par des tubes en matériau absorbant renfermant des pastilles de carbure de bore B₄C. On a proposé en particulier d'utiliser, comme tubes en matériau absorbant pour les crayons des grappes de réglage, des tubes en hafnium. Les grappes de réglage de la réactivité des réacteurs nucléaires peuvent donc comporter, soit en totalité, soit en partie, des crayons absorbants constitués par un tube de hafnium renfermant éventuellement des pastilles d'un matériau absorbant tel que le B₄C. Dans certains cas, on a proposé de réaliser seulement une partie des crayons absorbants, par exemple la partie inférieure, en hafnium.

Les grappes grises comportent à la fois des crayons absorbants et des crayons inertes constitués par un simple tube en matériau pas ou peu absorbant fermé à ses extrémités par des bouchons. Les crayons absorbants peuvent être constitués par des tubes en matériau absorbant tel que le hafnium.

Le hafnium présente l'avantage sur d'autres matériaux absorbants de présenter une excellente compatibilité avec le fluide primaire, un gonflement faible sous irradiation et une bonne tenue au fluage à la température de fonctionnement d'un réacteur nucléaire à eau sous pression. Il peut donc être utilisé sans gainage.

Toutefois, le hafnium ne peut guère être soudé qu'à des alliages de la même famille (titane, zirconium, hafnium) ou présentant avec le hafnium des solutions solides continues.

Si l'on utilise le hafnium pour le bouchon supérieur, la tenue mécanique de la grappe de réglage n'est pas optimale car le hafnium ne présente pas des caractéristiques mécaniques assez élevées vis-à-vis des sollicitations perçues par la grappe en fonctionnement. En outre, l'utilisation d'un bouchon en hafnium dans la partie supérieure du crayon absorbant n'est pas vraiment justifiée pour des questions d'absorption neutronique, dans la mesure où le bouchon supérieur n'est exposé qu'à un flux neutronique très faible puisqu'il reste au-dessus de la partie supérieure du coeur. Enfin la mise en oeuvre de hafnium pour le bouchon supérieur s'accompagne d'une augmentation de la masse de la grappe, ce qui peut être une contrainte forte en service. L'utilisation d'alliage de zirconium pour le bouchon supérieur serait compatible avec les impératifs de masse sans nuire au pouvoir absorbant. Cependant les propriétés mécaniques de ces alliages sont également insuffisantes. En revanche celles des alliages de titane sont parfaitement compatibles avec les performances requises.

En ce qui concerne le bouchon inférieur, l'utilisation de hafnium n'est pas exclue pour des raisons de tenue mécanique car les propriétés de ce matériau sont compatibles avec les sollicitations mécaniques appliquées sur ce composant. Dans cette zone à fort flux neutronique, il n'est pas inutile de disposer d'une potentialité d'absorption neutronique. Enfin le volume de ce bouchon inférieur restant faible, l'augmentation de masse induite reste limitée et compatible avec les exigences sur la masse des grappes de commande. Le bouchon inférieur peut donc être en hafnium, voire en alliage de zirconium, la compatibilité avec les exigences fonctionnelles restant acquise.

L'invention concerne donc un crayon pour grappe de réglage selon la revendication 1, une grappe de réglage selon la revendication 6, et un procédé de protection contre l'usure selon la revendication 7.

Les revendications dépendantes 2 à 5 et 8 à 10 portent sur des caractéristiques facultatives.

De préférence, une partie au moins des crayons absorbants de la grappe comprend un tube en hafnium et un bouchon supérieur en alliage de titane soudé sur la partie d'extrémité supérieure du tube en hafnium.

Les tubes en hafnium ou barres creuses sont élaborées selon un procédé connu par filage sur aiguille, de billettes percées, puis étirage à chaud sur mandrin déformable, le mandrin étant évacué en dernière opération par étirage à froid jusqu'à rupture. L'avantage de ce procédé de mise en forme à chaud est qu'il permet de mettre en oeuvre un métal beaucoup plus chargé en oxygène que s'il devait comporter des opération de mise en forme à froid. On considère généralement qu'au delà de 300 ppm d'oxygène, le hafnium ne peut plus guère être laminé à froid. Ce procédé permet d'utiliser des billettes contenant plus de 300 ppm et même plus de 700 ppm d'oxygène, telles qu'obtenues après la première fusion par bombardement d'électrons dans la gamme classique d'élaboration. L'élévation de la teneur en oxygène permet d'augmenter les caractéristiques mécaniques du métal, ce qui réduit considérablement la sensibilité aux défauts de surface et de fabrication (marques de coups, non-rectitude, ...).

Les bouchons en titane zirconium ou hafnium sont obtenus par usinage de barres pleines de diamètre adapté. Cette conception permet de satisfaire les exigences neutroniques, mécaniques et pondérales.

Cependant, les mouvements de grappe tant longitudinaux qu'orbitaux risquent d'induire des usures au niveau des guides de grappe (guidage continu et cartes de guidage) et de l'assemblage combustible (usure sur ogive). Il est en effet connu que ces matériaux (titane, zirconium et hafnium) ne résistent pas bien à l'usure. Un moyen connu de protéger ces matériaux contre l'usure est de réaliser un traitement d'oxydation à haute température en atmosphère oxydante. Un tel traitement conduit à réaliser une couche de diffusion d'oxygène qui assure la protection contre l'usure et une couche d'oxyde dont on ne peut guère empêcher la formation du fait de la très basse pression d'équilibre en atmosphère oxydante de l'oxyde. La profondeur de diffusion d'oxygène requise pour assurer la tenue à l'usure est d'une vingtaine de micromètres. La profondeur minimale visée pour cette opération est donc de 35 à 50 µm.

La mise en oeuvre d'un procédé d'oxydation en four de barreaux de 3.5 à 4.6 m nécessiterait de disposer d'un four de taille suffisante capable de travailler en atmosphère oxydante à 800-1000°C. L'invention concerne donc aussi une mise en oeuvre du traitement d'oxydation au défilé à une température plus élevée mais pendant une durée plus courte, ce qui permet d'assurer une diffusion de l'oxygène à une profondeur suffisante pour assurer la tenue à l'usure, de maintenir la constance de la température - gage de l'homogénéité de la barre oxydée, sans introduire de défauts de rectitude ou d'inhomogénéités mécaniques. Une diffusion d'oxygène sur -50 µm peut être obtenue par chauffage par induction à 1300-1700°C, dans une atmosphère oxydante constituée d'argon et d'oxygène, à une vitesse de 50-250 mm/mn au défilé. Le chauffage à une température supérieure risque d'induire des changements de phase dans le métal (1725-1775°C) ou dans l'oxyde (∼1700°C). L'oxydation au défilé est réalisée sur les crayons absorbants soudés à leur bouchon inférieur.

En outre, le traitement est mené sur des tubes de gainage soudés sur leur bouchon inférieur, ce qui permet d'assurer la continuité de la protection contre l'usure dans la zone du bouchon inférieur en forme d'ogive. Cependant, il n'est pas souhaitable de traiter des crayons terminés (avec bouchon supérieur soudé). En effet, la présence, pour certains crayons, de cale, colonne de pastilles B₄C et dispositif de maintien perturbe le chauffage, restreint le choix des cales et dispositifs de maintien (les matériaux qui risquent de conduire à des eutectiques fondus à la température de traitement doivent être exclus). En outre le changement de conditions de chauffage au niveau de la liaison hafnium-titane est délicat à maîtriser sans risquer un échauffement excessif du titane, échauffement qui serait préjudiciable au maintien de ses caractéristiques mécaniques.

Le traitement au défilé permet aussi de ne pas oxyder la zone qui sera soudée sur le bouchon supérieur, évitant ainsi de polluer la soudure.

La protection contre l'usure des bouchons supérieurs des crayons est réalisée par un traitement en four statique en atmosphère oxydante dans des conditions garantissant l'obtention des caractéristiques de l'alliage. Le traitement en four statique est réalisé généralement à une température comprise entre 550°C et 850°C, pendant une durée de 2 heures à 12 heures. Par exemple, on peut réaliser un traitement de 4h à 730°C.

On a réalisé des essais de tenue mécanique des grappes de réglage suivant l'invention dans des conditions reproduisant les conditions dans le réacteur nucléaire en fonctionnement.

On a effectué également des essais d'usure sur les différentes parties des crayons absorbants pour valider les traitements anti-usure par oxydation.

Les essais effectués visent à vérifier la tenue des bouchons des crayons absorbants et en particulier des bouchons supérieurs, des tubes en hafnium des crayons absorbants et des parties de liaison des bouchons supérieurs avec l'araignée de la grappe de réglage. On a effectué des essais d'endurance permettant de montrer que les grappes de réglage suivant l'invention peuvent fonctionner dans le réacteur nucléaire, sans destruction prématurée, pendant des durées de fonctionnement envisagées pour les réacteurs nucléaires de la technique actuelle.

Afin de bien faire comprendre l'invention, on va décrire, à titre d'exemple, en se référant aux figures jointes en annexe, une grappe de réglage et un crayon absorbant suivant l'invention.
La figure 1 est une vue en perspective d'une grappe de réglage pour réacteur nucléaire à eau sous pression, insérée dans un assemblage combustible.
La figure 2 est une vue en coupe axiale d'un crayon absorbant suivant l'invention.
La figure 3 est une vue en coupe partielle de la partie supérieure d'un crayon absorbant fixé sur une ailette d'araignée.

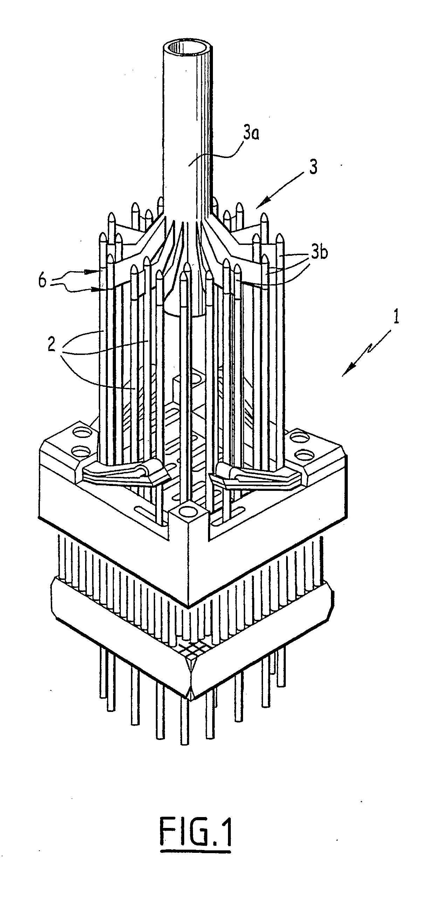

Sur la figure 1, on a représenté une grappe de réglage d'un réacteur nucléaire à eau sous pression désignée de manière générale par le repère 1.

La grappe de réglage 1 comporte un faisceau de crayons absorbants 2 et une araignée 3 assurant le support et le maintien des crayons 2 sous la forme d'un faisceau dans lequel les crayons sont parallèles entre eux et positionnés latéralement suivant le même réseau que celui des tubes-guides de l'assemblage de combustible.

L'araignée 3 comporte un pommeau cylindrique 3a cannelé intérieurement permettant de raccorder la grappe de réglage à une tige de commande pour son déplacement dans la direction verticale dans le coeur et des ailettes 3b solidaires du pommeau 3a sur chacune desquelles sont fixés des crayons absorbants 2 par leur bouchon supérieur

Une partie au moins des crayons 2 de la grappe de réglage 1 comporte un corps tubulaire constitué par un tube en hafnium.

Dans le cas où la grappe 1 est une grappe noire, les tubes de tous les crayons absorbants 2 de la grappe peuvent être en hafnium.

Dans le cas d'une grappe grise, seule une partie des crayons 2 comporte un tube en hafnium, les tubes des autres crayons étant en acier ou tout autre matériau non absorbant satisfaisant les exigences de fonctionnement en réacteur nucléaire.

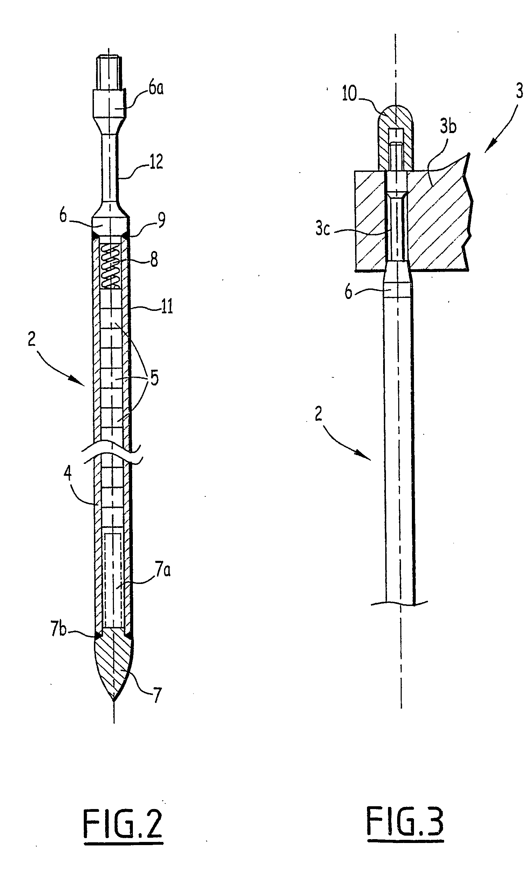

Sur la figure 2, on a représenté un crayon absorbant suivant l'invention d'une grappe noire qui peut être utilisée par exemple dans un réacteur nucléaire refroidi par de l'eau sous pression d'une puissance de 1300 MWe.

Le crayon 2 représenté sur la figure 2 comporte un tube en hafnium 4 renfermant un empilement de pastilles 5 en carbure de bore B₄C fortement absorbantes et fermé, à son extrémité supérieure, par un bouchon 6 en alliage de titane et, à son extrémité inférieure, par un bouchon 7 en forme d'ogive en hafnium ou en alliage de zirconium. Une diffusion d'oxygène 11 sur le tube soudé sur le bouchon inférieur a été réalisée et assure une protection contre l'usure. Le bouchon supérieur pourra être protégé ou non par une diffusion d'oxygène 12.

Le hafnium utilisé peut contenir plus de 300 ppm d'oxygène.

L'empilement de pastilles 5 en carbure de bore B₄C est maintenu à l'intérieur du tube 4 en hafnium par un ressort ou tout autre dispositif bloquant 8, l'extrémité inférieure de la colonne de pastilles étant en appui, par l'intermédiaire d'une entretoise 7a, sur le bouchon inférieur 7. Le bouchon inférieur 7 du crayon 2 en hafnium est rendu solidaire par un cordon de soudure 7b de l'extrémité inférieure du tube 4 en hafnium, le soudage pouvant être mis en oeuvre, par exemple, par un faisceau laser, faisceau d'électrons, TIG, friction ou résistance La soudure obtenue est parfaitement saine et parfaitement résistante.

Selon l'invention, le bouchon supérieur 6 du crayon 2 est en titane ou alliage de titane et par exemple en alliage Ti-6Al-4V (TA6V) ou en alliage TA3V2,5 et sa fixation rigide et étanche sur l'extrémité supérieure du tube 4 est réalisée par une soudure 9. Des essais ont montré que la soudure entre le bouchon en alliage de titane 6 et le tube en hafnium 4 peut être réalisée, par exemple, par un faisceau laser, faisceau d'électrons, TIG, friction ou résistance La soudure obtenue est parfaitement saine et parfaitement résistante. Dans le cas de soudures TIG ou par friction, la zone de rupture d'une éprouvette soudée hafnium/titane ou hafnium/Zircaloy se situe en dehors de la zone soudée. La rupture se produit sous une charge correspondant à la charge de rupture du matériau massif.

Comme il est visible sur la figure 3, le bouchon supérieur 6 en alliage de titane qui assure la fixation du crayon absorbant 2 sur une ailette 3b de l'araignée 3 de la grappe de réglage peut présenter une forme et des dimensions identiques à celles d'un bouchon supérieur d'un crayon absorbant suivant l'art antérieur. La partie supérieure du bouchon 6 présentant un filetage pour la fixation du crayon absorbant sur le bras 3b de l'araignée 3 peut être, soit vissée dans le bras de l'araignée, soit placée dans une disposition traversante et maintenue par l'intermédiaire d'un écrou 10 supérieur qui assurera aussi le guidage de la grappe lors de sa remontée.

Comme il est visible sur la figure 3, le bouchon d'extrémité supérieur du crayon absorbant 6 présente une partie à faible section 3c qui lui permet d'assurer au crayon la flexibilité requise.

En outre, on a pu vérifier que la soudure 9 entre le bouchon en alliage de titane 6 et l'extrémité supérieure du tube en hafnium 4 (figure 2) résiste aux sollicitations mécaniques, thermiques et chimiques dans l'ambiance du réacteur nucléaire, aucune corrosion supplémentaire n'étant observée au niveau de la soudure de raccordement 9 du bouchon supérieur 6.

En outre, le bouchon 6, pendant l'utilisation de la grappe de réglage dans un coeur de réacteur nucléaire, se trouve au-dessus de la surface supérieure du coeur, dans une zone qui n'est pas soumise au flux neutronique intense régnant dans le coeur du réacteur nucléaire. Le bouchon supérieur en alliage de titane n'est donc pas soumis à des conditions provoquant un gonflement sous irradiation ou une perte des caractéristiques mécaniques. Le bouchon supérieur présentant des caractéristiques mécaniques élevées garde donc ses caractéristiques pendant de longues durées de service à l'intérieur du coeur d'un réacteur nucléaire.

En outre, le bouchon supérieur des crayons absorbants en hafnium de la grappe de réglage suivant l'invention qui est en alliage de titane à hautes caractéristiques mécaniques peut être réalisé de manière à présenter une longueur la plus grande possible compatible avec l'utilisation de la grappe de réglage. On peut ainsi diminuer la longueur du tube de hafnium, ce qui permet de diminuer le coût et d'adapter la masse des crayons absorbants.

L'invention s'applique à toute grappe de réglage d'un réacteur nucléaire refroidi par de l'eau légère comportant des crayons absorbants comportant un tube en hafnium.

## Revendications

1. Crayon absorbant d'une grappe de réglage d'un réacteur nucléaire à eau pressurisée, crayon comportant un tube de gainage (4) en hafnium, un bouchon supérieur (6) en alliage de titane soudé sur une partie d'extrémité supérieure du tube de gainage (4) en hafnium et un bouchon inférieur (7) en hafnium massif soudé sur une partie d'extrémité inférieure du tube de gainage (4) en hafnium, crayon dans lequel :
- une protection contre l'usure du bouchon supérieur (6) en alliage de titane a été obtenue par un traitement en four statique en atmosphère oxydante à une température comprise entre 550°C et 850°C, pendant une durée de 2 heures à 12 heures ; et
- une protection contre l'usure du crayon a été réalisée par oxydation à haute température en atmosphère oxydante du tube de gainage (4) soudé au bouchon inférieur (7) mais pas au bouchon supérieur (6).

2. Crayon suivant la revendication 1, dans lequel le bouchon supérieur (6) est en un alliage de titane TA6V ou TA3V2.5.

3. Crayon suivant la revendication 1 ou 2, dans lequel l'oxydation du tube de gainage (4) a été obtenue au défilé à une température de 1300°C à 1700°C en atmosphère oxydante et à une vitesse de 50 à 250 mm/mn.

4. Crayon suivant l'une des revendications précédentes, dans lequel la soudure de l'un au moins du bouchon supérieur (6) et inférieur (7) a été réalisée par l'un au moins des procédés suivants : soudage par friction, soudage par résistance, soudage TIG.

5. Crayon suivant l'une des revendications précédentes, dans lequel le hafnium utilisé pour la fabrication du tube de gainage (4) et du bouchon inférieur (7) contient plus de 300 ppm d'oxygène.

6. Grappe de réglage d'un réacteur nucléaire à eau pressurisée constituée d'un faisceau de crayons (2) absorbant les neutrons, comportant chacun un tube métallique (4), appelé tube de gainage, fermé, à son extrémité supérieure, par un bouchon supérieur (6) et, à son extrémité inférieure, par un bouchon inférieur (7) et un support (3), ou araignée, de forme rayonnante sur lequel les crayons absorbants (2) sont fixés par l'intermédiaire de leurs bouchons supérieurs (6), **caractérisée par le fait qu'**une partie au moins des crayons absorbants sont des crayons selon l'une des revendications précédentes.

7. Procédé de protection contre l'usure d'un crayon absorbant d'une grappe de réglage d'un réacteur nucléaire à eau pressurisée, crayon comportant un tube de gainage (4) en hafnium, un bouchon supérieur (6) en alliagé de titane soudé sur une partie d'extrémité supérieure du tube de gainage (4) en hafnium et un bouchon inférieur (7) en hafnium massif soudé sur une partie d'extrémité inférieure du tube de gainage (4) en hafnium, dans lequel on réalise :
- une protection contre l'usure du bouchon supérieur (6) en alliage de titane par un traitement en four statique en atmosphère oxydante à une température comprise entre 550°C et 850°C, pendant une durée de 2 heures à 12 heures ; et
- une protection contre l'usure du crayon par oxydation à haute température en atmosphère oxydante du tube de gainage (4) soudé au bouchon inférieur (7) mais pas au bouchon supérieur (6).

8. Procédé selon la revendication 7, dans lequel on réalise l'oxydation du tube de gainage (4) soudé au bouchon inférieur (7), au défilé, à une température de 1300°C à 1700°C et à une vitesse de 50 à 250 mm/mn.

9. Procédé selon la revendication 7 ou 8, dans lequel le bouchon supérieur (6) est en un alliage de titane TA6V ou TA3V2.5.

10. Procédé selon l'une des revendications 7 à 9, dans lequel le hafnium utilisé pour la fabrication du tube de gainage (4) et du bouchon inférieur (7) contient plus de 300 ppm d'oxygène.

## Patentansprüche

1. Absorbierender Stab eines Steuerelements eines Druckwasserkernreaktors, wobei der Stab aufweist ein Hüllrohr (4) aus Hafnium, ein oberes Verschlussteil (6) aus einer Titanlegierung, welches an einem oberen Endabschnitt des Hüllrohrs (4) aus Hafnium angeschweißt ist, und ein unteres, massives Verschlussteil (7) aus Hafnium, welches an einem unteren Endabschnitt des Hüllrohrs (4) aus Hafnium angeschweißt ist, wobei bei dem Stab:
ein Schutz gegen die Abnutzung des oberen Verschlussteils (6) aus einer Titanlegierung erreicht worden ist durch eine statische Ofen-Behandlung in oxidierender Atmosphäre bei einer zwischen 550°C und 850°C liegenden Temperatur über eine Dauer von 2 Stunden bis 12 Stunden, und
ein Schutz gegen die Abnutzung des Stabs realisiert worden ist durch Oxidation des Hüllrohrs (4), welches an das untere Verschlussteil (7) aber nicht an das obere Verschlussteil (6) angeschweißt ist, bei hoher Temperatur in oxidierender Atmosphäre.

2. Stab gemäß Anspruch 1, bei welchem das obere Verschlussteil (6) aus einer Titanlegierung TA6V oder TA3V2.5 ist.

3. Stab gemäß Anspruch 1 oder 2, bei welchem die Oxidation des Hüllrohrs (4) beim Durchlaufen bei einer Temperatur von 1300°C bis 1700°C in oxidierender Atmosphäre und bei einer Geschwindigkeit von 50 bis 250 mm/min erreicht worden ist.

4. Stab gemäß einem der vorhergehenden Ansprüche, bei welchem das Verschweißen von wenigstens einem von dem oberen (6) und dem unteren (7) Verschlussteil durch wenigstens eines von den folgenden Verfahren realisiert worden ist: Reibschweißen, Widerstandsschweißen, WIG-Schweißen.

5. Stab gemäß einem der vorhergehenden Ansprüche, bei welchem das Hafnium, welches zur Herstellung des Hüllrohrs (4) und des unteren Verschlussteils (7) verwendet wird, mehr als 300 ppm Sauerstoff enthält.

6. Steuerelement für einen Druckwasserkernreaktor, gebildet von einem Bündel von Neutronen absorbierenden Stäben (2), wobei jeder ein metallisches Rohr (4), genannt Hüllrohr, aufweist, welches an seinem oberen Ende durch ein oberes Verschlussteil (6) und an seinem unteren Ende durch ein unteres Verschlussteil (7) verschlossen ist, und einem/einer strahlenförmigen Trägerteil (3) oder Spinne, an welchem/welcher die absorbierenden Stäbe (2) über ihre oberen Verschlussteile (6) fixiert sind, **dadurch gekennzeichnet, dass** wenigstens ein Teil der absorbierenden Stäbe Stäbe gemäß einem der vorhergehenden Ansprüche sind.

7. Verfahren zum Schutz gegen die Abnutzung eines absorbierenden Stabs eines Steuerelements eines Druckwasserkernreaktors, wobei der Stab aufweist ein Hüllrohr (4) aus Hafnium, ein oberes Verschlussteil (6) aus einer Titanlegierung, welches an einem oberen Endabschnitt des Hüllrohrs (4) aus Hafnium angeschweißt ist, und ein unteres, massives Verschlussteil (7) aus Hafnium, welches an einem unteren Endabschnitt des Hüllrohrs (4) aus Hafnium angeschweißt ist, bei welchem realisiert wird:
ein Schutz gegen die Abnutzung des oberen Verschlussteils (6) aus einer Titanlegierung durch eine statische Ofen-Behandlung in oxidierender Atmosphäre bei einer zwischen 550°C und 850°C liegenden Temperatur über eine Dauer von 2 Stunden bis 12 Stunden, und
ein Schutz gegen die Abnutzung des Stabs durch Oxidation des Hüllrohrs (4), welches an das untere Verschlussteil (7) aber nicht an das obere Verschlussteil (6) angeschweißt ist, bei hoher Temperatur in oxidierender Atmosphäre.

8. Verfahren gemäß Anspruch 7, bei welchem die Oxidation des Hüllrohrs (4), welches an das untere Verschlussteil (7) angeschweißt ist, beim Durchlaufen bei einer hohen Temperatur von 1300°C bis 1700°C und bei einer Geschwindigkeit von 50 bis 250 mm/min erreicht wird.

9. Verfahren gemäß Anspruch 7 oder 8, bei welchem das obere Verschlussteil (6) aus einer Titanlegierung TA6V oder TA3V2.5 ist.

10. Verfahren gemäß einem der Ansprüche 7 bis 9, bei welchem das Hafnium, welches für die Herstellung des Hüllrohrs (4) und des unteren Verschlussteils (7) verwendet wird, mehr als 300 ppm Sauerstoff enthält.

## Claims

1. Absorber rod of a control cluster of a pressurised water nuclear reactor, which rod comprises a cladding tube (4) made from hafnium, a top plug (6) made from titanium alloy welded to a top end part of the hafnium cladding tube (4) and a bottom plug (7) made from solid hafnium welded to a bottom end part of the hafnium cladding tube (4), for which rod:
- a protection against wear of the titanium alloy top plug (6) was obtained by a static furnace treatment in an oxidising atmosphere at a temperature of between 550°C and 850°C for a period of 2 to 12 hours; and
- a protection against wear of the rod was obtained by oxidising the cladding tube (4) welded to the bottom plug (7) but not to the top plug (6) at high temperature in an oxidising atmosphere.

2. Rod as claimed in claim 1, in which the top plug (6) is made from a TA6V or TA3V2.5 titanium alloy.

3. Rod as claimed in claim 1 or 2, in which the cladding tube (4) was oxidised in-line at a temperature of 1300°C to 1700°C in an oxidising atmosphere and at a rate of 50 to 250 mm/mn.

4. Rod as claimed in one of the preceding claims, in which the weld of at least one of the top (6) and bottom (7) plug was obtained by at least one of the following methods: friction welding, resistance welding, TIG welding.

5. Rod as claimed in one of the preceding claims, in which the hafnium used to manufacture the cladding tube (4) and bottom plug (7) contains more than 300ppm oxygen.

6. Control cluster of a pressurised water nuclear reactor made up of a bundle of neutron-absorbing rods (2), each comprising a metal tube (4), namely a cladding tube, closed at its top end by a top plug (6) and at its bottom end by a bottom plug (7) and a support (3), or spider, of a radiating shape to which the absorber rods (2) are affixed by means of their top plugs (6), **characterised in that** at least some of the absorber rods are rods as claimed in one of the preceding claims.

7. Method of protecting an absorber rod of a control cluster of a pressurised water nuclear reactor against wear, which rod comprises a cladding tube (4) made from hafnium, a top plug (6) made from titanium alloy welded to a top end part of the hafnium cladding tube (4) and a bottom plug (7) made from solid hafnium welded to a bottom end part of the hafnium cladding tube (4), in which:
- the top plug (6) of titanium alloy is protected against wear by a static furnace treatment in an oxidising atmosphere at a temperature of between 550°C and 850°C for a period of 2 to 12 hours; and
- the rod is protected against wear by oxidising the cladding tube (4) welded to the bottom plug (7) but not to the top plug (6) at high temperature in an oxidising atmosphere.

8. Method as claimed in claim 7, in which the cladding tube (4) welded to the bottom plug (7) is oxidised in-line at a temperature of 1300°C to 1700°C and at a rate of 50 to 250 mm/mn.

9. Method as claimed in claim 7 or 8, in which the top plug (6) is made from a TA6V or TA3V2.5 titanium alloy.

10. Method as claimed in one of claims 7 to 9, in which the hafnium used to manufacture the cladding tube (4) and bottom plug (7) contains more than 300ppm oxygen.
